# DEMANDE DE BREVET EUROPEEN

(11) **EP 4 535 258 A1**
(43) Date de publication de la demande: **09.04.2025**
(21) Numéro de dépôt: 24202261.4
(22) Date de dépôt: 24.09.2024
(51) Int. Cl.: G06Q 10/10, G06Q 50/26, H04L 67/306

(54) **PROCÉDÉ POUR ORIENTER UN USAGER VERS UN SERVICE ET OUTIL METTANT EN UVRE UN TEL PROCÉDÉ**

(30) Priorité: 02.10.2023 FR 2310492
(71) Demandeur: ESII, 34880 Laverune (FR)
(72) Inventeur: RIEUX, Frédéric, 34570 SAINT-PAUL-ET-VALMALLE (FR); LERGENMULLER, Philippe, 34430 SAINT-JEAN-DE-VEDAS (FR)
(74) Mandataire: IPAZ

(57) **Abrégé**

L'invention concerne un système pour orienter des utilisateurs (1) vers des opérateurs (2), qui comporte une centrale de gestion (4) communiquant avec des postes de saisie (10 - 13) pour les utilisateurs et des postes terminaux (20 - 23) pour les opérateurs. Le système comporte plusieurs canaux de communication (3) entre lesdits postes de saisie et lesdits postes terminaux. La centrale de gestion (4) comporte un module d'ordonnancement des demandes des utilisateurs (1) dans chacun des canaux de communication (3), qui reçoit des demandes d'utilisateurs et, pour chaque demande reçue, une information de prévision de flux dans chacun desdits canaux de communication (3), ainsi qu'une information de prévision de temps d'attente. Le module d'ordonnancement crée, pour chaque canal de communication (3), des files d'attente de mise en communication entre un utilisateur (1) et un opérateur (2).

## Description

### DOMAINE DE L'INVENTION

La présente invention concerne l'organisation de l'accueil du public en quête d'un service, le public comprenant des usagers qui présentent des profils différents et qui ont besoin de services différents. Le procédé conforme à l'invention vise à faciliter la communication entre les usagers et le service délivré par une institution, pour que l'usager puisse obtenir rapidement le service ou l'information dont il a besoin sous une forme qui lui correspond.

L'invention trouve une application particulière dans les services délivrés par des organismes ou des entreprises accueillant du public, physiquement ou virtuellement, proposant des prestations ou des informations nécessitant (ou non) l'intervention d'un opérateur.

L'invention concerne également un produit programme d'ordinateur, un dispositif de traitement configuré pour mettre en œuvre un tel procédé, et un appareil électronique (ou outil) comprenant un tel dispositif de traitement.

### ETAT DE LA TECHNIQUE

Il existe aujourd'hui de nombreux outils pour gérer l'accueil des usagers dans les administrations, afin de les orienter vers les services qu'ils demandent et afin d'organiser l'attente de ces usagers.

Avec la crise du COVID 19, de nouveaux canaux de communication se sont développés (rendez-vous en visio-conférence, échanges par courriels, entretiens téléphoniques etc.) entre les agents du service public et les usagers. Certains usagers se sont adaptés facilement à ces nouveaux canaux tandis que d'autres s'y sentent perdus ou n'ont pas accès aux outils informatiques qui sont nécessaires pour ces nouveaux canaux de communication : la crise du COVID 19 a ainsi été à l'origine d'une « séparation » entre les usagers qui maitrisent les outils informatiques et qui en disposent, d'une part, et ceux qui ont besoin d'être accompagnés de façon plus traditionnelle, d'autre part, au risque de voir ces derniers usagers renoncer aux services publics dont ils ont besoin. On parle alors des « naufragés du numérique » ou « d'illectronisme ».

Le défenseur du droit a alors émis des recommandations pour gérer l'illectronisme et notamment celles de maintenir plusieurs formes d'accès aux services, afin de prendre en compte les difficultés de tous les usagers.

Dans ce contexte, l'invention vise à proposer un outil et un procédé qui détermine, en fonction de chaque usager, le canal de communication le plus efficient et le plus efficace, en prenant en considération les caractéristiques liées à l'usager lui-même et celles liées à son besoin.

On connait les dispositifs qui permettent de gérer des files d'attente en délivrant des tickets avec des numéros, les usagers étant appelés au fur et à mesure par le numéro qui leur a été attribué.

Pour orienter les usagers, il peut être prévu un hôte d'accueil qui interroge les usagers afin de les orienter vers le service adapté, évitant ainsi à l'usager d'attendre et de faire la queue dans un autre service.

Ces moyens technique et humain mis en oeuvre ne permettent pas de faire face à tous les cas de figures en ce qui concerne la gestion de l'identification et la prise de rang de personnes.

On connait du document FR 2822977 un dispositif qui permet d'identifier l'usager, d'enregistrer son besoin tel qu'il l'exprime, et d'orienter l'usager en lui délivrant un ticket, ou analogue en mentionnant les éléments permettant d'identifier son besoin / sa demande.

Ce dispositif permet à un opérateur d'identifier l'utilisateur et son besoin, mais il ne prend pas en compte toutes les nouvelles formes de communication. Par ailleurs, il traite tous les usagers de la même façon, sans tenir compte des capacités de chacun à s'adapter ou non au service fourni.

### EXPOSE DE L'INVENTION

L'invention permet de prendre en considération les différences entre les usagers et de leur fournir un service, ou une réponse à leur besoin en fonction du besoin exprimé mais également en fonction des caractéristiques propres à chacun des usagers.

À cet effet, l'invention concerne un système pour orienter des utilisateurs vers des opérateurs, apte à délivrer des réponses à des demandes desdits utilisateurs, chaque réponse parmi lesdites réponses étant délivrée suivant au moins un canal de communication, ledit système comportant :
- des postes de saisie, permettant aux utilisateurs de formuler lesdites demandes,
- des postes terminaux, permettant auxdits opérateurs de délivrer lesdites réponses, et
- une centrale de gestion, qui communique avec lesdits postes de saisie et lesdits postes terminaux.

Le système conforme à l'invention est remarquable en ce qu'il comporte plusieurs canaux de communication entre lesdits postes de saisie et lesdits postes terminaux, en ce que ladite centrale de gestion comporte un module d'ordonnancement des demandes des utilisateurs dans chacun des canaux de communication, ledit module d'ordonnancement recevant :
- des premières informations relatives à des demandes d'utilisateurs et à des profils d'utilisateurs, lesdites premières informations comprenant pour chaque utilisateur une information de préférence d'au moins un canal de communication en fonction d'un profil utilisateur,
et recevant, pour chaque demande utilisateur reçue :
- une information de prévision de flux dans chacun desdits canaux de communication, ainsi qu'une information de prévision de temps d'attente,
ledit module d'ordonnancement créant, pour chaque canal de communication, des files d'attente de mise en communication entre un utilisateur et un opérateur.

Avantageusement, ladite centrale de gestion comporte un module de collecte de données relatives à chacun desdits utilisateurs, comportant des données personnelles apte à être renseignées par lesdits utilisateurs. Il peut aussi collecter, de façon avantageuse, des données comportementales associées à chacun des utilisateurs.

En outre, le module de collecte de données relatives aux utilisateurs comporte une première intelligence artificielle qui détermine ledit profil d'utilisateur pour chaque utilisateur, en fonction desdites informations personnelles renseignées pour chaque utilisateur et/ou en fonction des données comportementales collectées en temps réel pour chaque utilisateur, ladite intelligence artificielle déterminant l'utilisation d'au moins un canal de communication particulier parmi lesdits canaux de communication pour ledit profil d'utilisateur déterminé.

Suivant un mode de réalisation non limitatif qui sera présenté par la suite, la centrale de gestion comporte un module de prévision de flux de demandes d'utilisateurs dans lesdits canaux de communication, qui détermine ladite information de prévision de flux de demandes dans chaque canal de communication en fonction des demandes des utilisateurs reçues en temps réel et en fonction d'informations relatives à des données externes collectées par un module de collecte de données externes, ledit module de prévision des flux de demandes communiquant avec ledit module d'ordonnancement.

Avantageusement, le module de prévision des flux de demandes comporte une seconde intelligence artificielle qui collecte des informations relatives aux demandes reçues en temps réel et à des données internes issues d'un apprentissage de ladite intelligence artificielle sur les habitudes de demandes des utilisateurs et sur les canaux de communication les plus sollicités en fonction du temps et en fonction de données externes, ladite seconde intelligence artificielle déterminant ladite information de prévision de flux de demandes dans lesdits canaux à transmettre audit module d'ordonnancement.

De façon avantageuse encore, ladite centrale de gestion comporte un module d'estimation de temps d'attente, transmettant audit module d'ordonnancement une estimation de temps d'attente pour chaque demande d'utilisateur pour chaque canal de communication particulier, de sorte que si plusieurs canaux de communication particuliers sont possibles, ledit module d'ordonnancement puisse déterminer le canal de communication particulier le plus rapide pour chaque demande de chaque utilisateur.

De préférence, le module de calcul de temps d'attente comporte une troisième intelligence artificielle qui détermine ladite estimation de temps d'attente dans chaque canal de communication pour chaque demande d'utilisateur reçue en temps réel et en fonction de données internes issues d'un apprentissage de ladite troisième intelligence artificielle sur les habitudes de demandes des utilisateurs et sur les canaux de communication les plus sollicités en fonction du temps et en fonction de données externes, ladite troisième intelligence artificielle déterminant ladite information de prévision de temps d'attente qui est transmise audit module d'ordonnancement.

De préférence encore, la centrale de gestion comporte un second module de collecte de données relatives auxdits opérateurs, pour déterminer des canaux de communication possibles dudit poste terminal associé à l'opérateur.

Suivant un mode de mise en oeuvre avantageux, le module d'ordonnancement comporte une quatrième intelligence artificielle qui génère des files d'attente de demandes dans chacun des canaux de communication en fonction des informations qui lui sont transmises par le module d'estimation des temps d'attente et par le module d'estimation des flux et :
- il autorise ou empêche un poste terminal à communiquer avec plusieurs postes de saisie uniquement suivant un canal de communication particulier, et
- il autorise ou empêche un poste terminal à communiquer avec plusieurs postes de saisie suivant plusieurs canaux de communication.

Ainsi réalisé, le système conforme à l'invention permet de rassembler les différents canaux de contact/ de communication sur une seule plateforme et de proposer la solution la plus adapté à l'utilisateur en mettant en oeuvre un outil (module d'ordonnancement) qui met en place une règle d'ordonnancement des demandes, prenant en considération non seulement la nature de la demande, mais également le profil de l'utilisateur pour fournir une réponse à la demande adaptée à l'utilisateur.

Le système conforme à l'invention est donc orienté vers une mise en relation « Besoin / comportement VS disponibilité prévisionnel / compétence / canal de communication » plutôt que vers une mise en relation « motif de la demande/ ressource disponible (la plus appropriée) », dans le but de traiter au mieux les demandes (charges) compte tenu des besoins et dans le sens de l'efficience du système dans son ensemble.

### BREVE DESCRIPTION DES FIGURES

L'invention sera mieux comprise à la lecture de la description qui va suivre, donnée uniquement à titre d'exemple non limitatif et faite en se référant aux dessins annexés sur lesquels :
[Fig. 1] est une représentation schématique des divers opérateurs, postes de saisie, centrale de gestion et éléments essentiels que met en oeuvre le système conforme à l'invention, et
[Fig. 2] est une représentation schématique plus détaillée de certains éléments montrés en figure 1, illustrant les échanges d'informations entre les éléments mis en oeuvre par le système conforme à l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

### DESCRIPTION DETAILLEE

Le système conforme à l'invention a pour objectif de fournir aux utilisateurs 1 diverses possibilités d'accueil et de prises en charge par un opérateur 2, suivant les canaux 3 disponibles qui sont mis à disposition des utilisateurs 1 par la structure les accueillant (mettant en oeuvre le système conforme à l'invention).

Le système selon l'invention a pour objectif de proposer le meilleur canal de communication pour l'utilisateur en prenant en considération d'abord des caractéristiques qui sont propres à l'utilisateur (qui il est, ce dont il peut avoir besoin, son comportement vis-à-vis du poste de saisie sur lequel il va faire une demande). L'invention permet ainsi de prendre en considération le fait que le demandeur ne sait pas toujours bien définir sa demande, et le fait qu'il n'est pas obligatoirement familier avec les moyens techniques avec lesquels il doit formuler sa demande.

L'invention permet également de traiter rapidement les demandes des personnes qui sont, au contraire, à l'aise avec les nouvelles technologies, sans les obliger à passer par un système qui leur propose des services dont ils n'ont pas besoin et qui ralentissent le processus de mis en correspondance de l'utilisateur avec un opérateur capable de lui répondre sans avoir à le recevoir physiquement ou à prendre rendez-vous, par exemple.

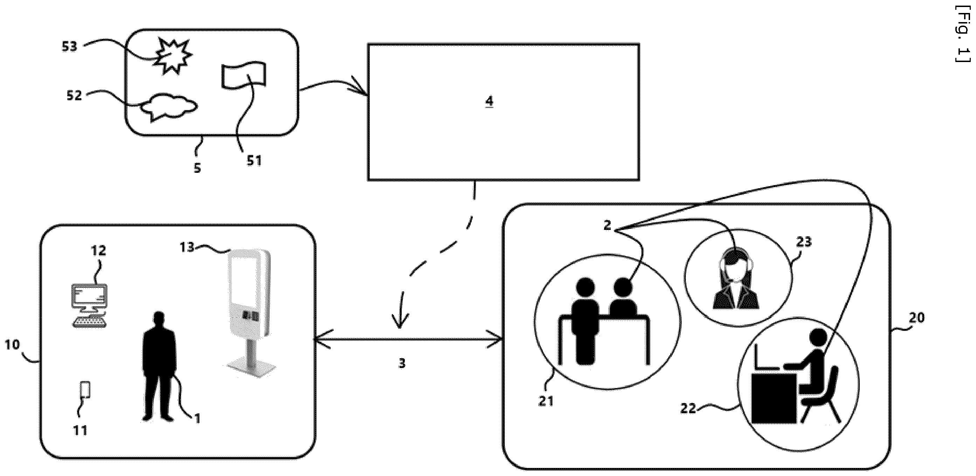

La figure 1 montre l'utilisateur 1 qui dispose d'une variété de moyens de communication, comme un smartphone 11, un ordinateur 12, une borne de communication 13 présente géographiquement dans le lieu dans lequel le système conforme à l'invention est mis en oeuvre.

Tout moyen de communication dont dispose l'utilisateur 1 sera appelé poste de saisie 10.

Parallèlement, les opérateurs 2 disposent également de moyens de communication : ils peuvent comporter un bureau 21, équipé ou non d'un ordinateur 22, pour recevoir physiquement l'utilisateur et répondre à ses questions, un téléphone 23 etc.

Tout moyen de communication dont dispose l'opérateur 2 sera appelé poste terminal 20.

Tous les postes terminaux 20 ne peuvent pas communiquer avec tous les postes de saisie 10 et certains postes terminaux peuvent communiquer de plusieurs façons différentes avec certains postes de saisie 10 : c'est le cas des ordinateurs, avec lesquels on peut communiquer par écrit (courriers électroniques, messagerie instantanée de type « chatbot »), par système audio (voix sur IP, Internet en général) et /ou vidéo (logiciels de visioconférence etc.).

Tous les canaux de communication entre les postes de saisie et les postes terminaux sont des possibilités, pour l'utilisateur 1, d'obtenir potentiellement une réponse à une demande.

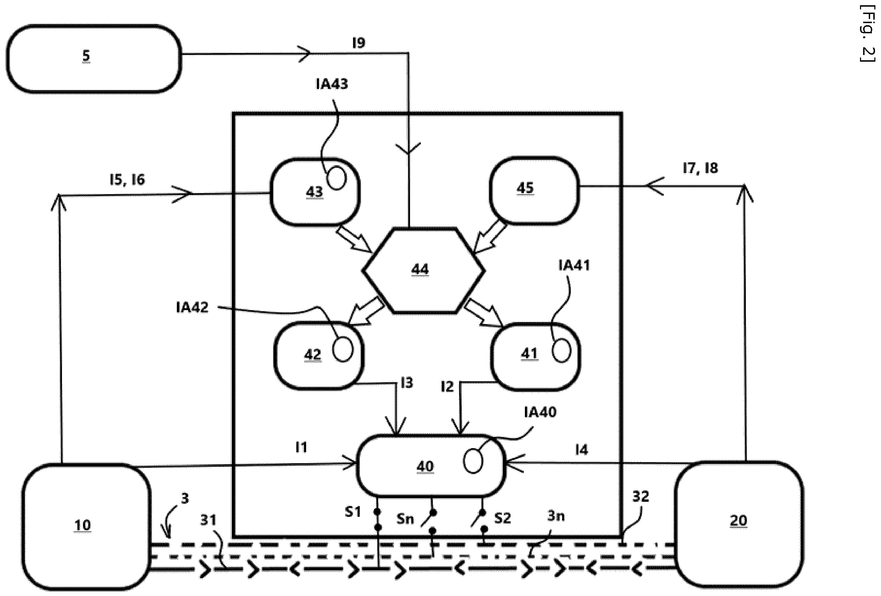

Ces canaux de communication sont illustrés par exemple en figure 2 par des lignes en traits pointillés 3 qui relient le poste de saisie 10 au poste terminal 20, les postes étant représentés schématiquement.

L'utilisateur 1 peut avoir un profil pour lequel on observe un canal de communication à privilégier : soit l'opérateur exprime clairement son souhait de communiquer via un canal de communication particulier (cas d'une personne âgé, par exemple, qui ne souhaite communiquer que par téléphone ou avec des rendez-vous physiques, ou cas d'une personne active qui ne souhaite communiquer que par chatbot ou par emails), soit l'opérateur a des particularités physiques qui l'obligent à communiquer d'une certaine façon (handicape : surdité, utilisateur malvoyant, incapacité physique de se déplacer etc.).

Le système conforme l'invention vise à offrir, à chaque utilisateur, le moyen d'obtenir une réponse d'un opérateur le plus rapidement possible et de la façon la plus adaptée à l'utilisateur.

Pour cela, le système conforme à l'invention comporte une centrale de gestion 4, qui permet de mettre en communication l'utilisateur et l'opérateur via moins un canal de communication, ou bien d'orienter l'utilisateur vers un opérateur disponible en favorisant un canal de communication particulier, grâce à des informations relatives à l'utilisateur, en fonction des demandes de l'utilisateur (nature de la demande et choix de canal de communication particulier, formulé explicitement ou non par l'utilisateur) et en fonction éventuellement de paramètres indépendants de la demande de l'utilisateur (ou « paramètres externes - voir le module portant la référence 5 sur la figure 1 - par exemple : fréquentation du lieu où le système est mis en œuvre-calendrier 51, météorologie 52, évènement social 53, etc.) grâce notamment à une estimation du temps d'attente de l'utilisateur, relative à sa demande et au canal de communication choisi ou déterminé par le système, et grâce à une estimation du flux de demandes de même nature ou de demandes en attente de réponse dans le même canal de communication que celui choisi ou déterminé pour l'utilisateur.

La figure 2 illustre de façon plus détailler les différents modules que comporte la centrale de gestion 4 du système conforme à l'invention, pour orienter (ou mettre en relation) un poste de saisie 10 d'un utilisateur vers un poste terminal 20 d'un opérateur et pour organiser des files d'attente dans les différents canaux possibles proposés par le système.

La centrale de gestion 4 comporte un module d'ordonnancement 40 qui reçoit et enregistre des informations.

Les informations qu'il reçoit sont de différentes natures et proviennent de différentes sources :
D'une part, les informations reçues par le module d'ordonnancement 40 proviennent de l'utilisateur : l'utilisateur s'identifie (ou non) et formule une demande, via son poste de saisie 10, qui renseigne le module d'ordonnancement sur l'utilisateur, sur la nature de sa demande et sur la nature du poste de saisie avec lequel l'utilisateur formule sa demande (borne 13, smartphone 11 ou ordinateur 12, par exemple : cela indique au module d'ordonnancement le canal par lequel l'opérateur fait sa demande et cela permet d'identifier un certain nombre de canaux par lesquels la réponse à la demande de l'utilisateur peut être transmise).

Si l'utilisateur n'arrive pas à formuler une demande précise, le système conforme à l'invention identifie l'hésitation de l'utilisateur grâce à une analyse comportementale (qui sera vue par la suite) et cela génère également une forme de demande.

Cette information, relative à la demande de l'utilisateur, est référencée I1.

L'information I1 peut comprendre une indication sur le choix du canal de communication sollicité par l'utilisateur, ou non.

Une seconde information I2 est transmise au module d'ordonnancement 40 : elle provient d'un module de prévision des flux 41 que comporte également la centrale de gestion 4.

Le module de prévision des flux sera présenté plus en détails par la suite.

La seconde information I2 est donc une prévision de flux de demandes, qui indique au module 40 une estimation sur la quantité de demandes de même nature que celle de l'information I1 formulée par l'utilisateur au moment où l'utilisateur formule sa demande, en fonction des canaux de communication disponibles et correspondant au canaux de communication susceptibles d'être choisis pour transmettre la réponse à la demande de l'utilisateur. La prévision de flux de demande peut également concerner les demandes de natures différentes mais dans un canal de communication particulier, choisi par l'utilisateur ou déterminé par le système en fonction du comportement de l'utilisateur.

Les canaux de communication disponibles ou occupés, en temps réel, sont indiqués par les opérateurs 2 à la centrale de gestion : plus précisément, une information I4 (figure 2) est ainsi transmise en temps réel par les postes terminaux opérationnels du système au module d'ordonnancement 40.

Une troisième information I3 est enfin transmise au module d'ordonnancement 40 : elle provient d'un module de calcul des temps d'attente 42 que comporte également la centrale de gestion 4. L'information I3 est une estimation du temps d'attente de l'utilisation pour qu'il puisse obtenir une réponse à sa demande (ou de l'aide pour formuler sa demande) via un ou plusieurs canaux de communication, au regard des choix de canaux de communication qu'il a formulés ou au regard des possibilités de canaux de communication possibles pour permettre à un opérateur de répondre à la demande de l'utilisateur, en fonction du post de communication avec lesquels l'utilisateur a formulé sa demande.

En fonction de l'ensemble de ces informations I1, 12, I3 et I4, le module d'ordonnancement 40 détermine au moins un canal de communication (31, 32... 3n) parmi les canaux de communication 3 du système, entre ledit poste terminal 20 et ledit poste de saisie 10, pour permettre à l'utilisateur 1 d'obtenir une réponse sa demande : il peut indiquer ces possibilités à l'utilisateur 1 qui accepte, ou non, l'une des propositions de canal de communication.

Si le canal de communication 31 convient à l'utilisateur, alors, le module d'ordonnancement autorise la communication entre le poste de saisie 10 et le poste terminal 20 (voir figure 2) et il organise la file d'attente des demandes, comportant celle de l'utilisateur 1, dans le canal de communication 31.

La mise en communication d'un canal 31, 32 3n entre le poste terminal 20 et le poste de saisie 10 est symbolisé par des interrupteurs S1, S2 et Sn en figure 2.

Conformément à l'invention la centrale de gestion comporte également un module 43 de collecte de données relatives à l'utilisateur : il s'agit d'un module qui permet au système de connaître les habitudes de l'utilisateur 1, pour lui permettre de privilégier notamment les canaux de communication préférés de l'utilisateur ou d'anticiper les canaux de communication qui seraient les plus adaptés au profil de l'utilisateur 1.

Le module 43 de collecte de données relatives à l'utilisateur est renseigné de deux façons : l'utilisateur lui-même indique au système les données qui lui sont propres (informations 15, par exemple, si le système est mis en oeuvre dans un service administratif de santé, le module de collecte de données est renseigné par l'identité de l'utilisateur, son âge, son numéro de sécurité sociale, son adresse etc.).

Le module 43 de collectes de données relatives à l'utilisateur est également renseigné par les habitudes d'utilisation du service par l'utilisateur ou par le comportement adopté par l'utilisateur avec le poste de saisie (Informations I6) : le module 43 est alors un module de collecte de données comportementales, qui permet d'identifier par exemple que l'utilisateur cherche une information sur son poste de saisie, ou semble perdu dans les menus proposés par le poste de saisie.

Le module 43 de collecte de données relatives à l'utilisateur collecte ainsi des données comportementales de l'utilisateur pour proposer à l'utilisateur un service et déterminer des canaux de communication possibles avec ledit poste terminal pour ledit poste de saisie.

Une intelligence artificielle IA43 permet de proposer un service et au moins un canal de communication à l'utilisateur à partir de données comportementales collectées en temps réel (I6) et à partir des informations relatives à l'utilisateur que le module a gardé en mémoire (données personnelles, demandes précédentes, services qui sont concernés par le profile utilisateur identifié, etc.).

L'intelligence artificielle IA43 est une intelligence qui est enrichie en permanence par les données comportementales relatives à l'utilisateur 1 et les demandes formulées par l'utilisateur, permettant de créer un profil associé à l'utilisateur en fonction de toutes les données qui le concernent.

Le profil ainsi créé alimente un programme informatique 44 qui communique avec tous les modules de la centrale de gestion 4.

Le programme informatique 44 permet également de sélectionner des services en fonction du profil utilisateur, de sorte à proposer à l'utilisateur que les services qui sont susceptibles de le concerner.

Par exemple, si l'utilisateur est une femme âgée, le programme informatique peut supprimer l'offre de service relatif des questions sur le congé maternité.

Un module 45 de collecte de données relatives aux opérateurs et à leur poste terminal est également compris dans la centrale de gestion 4 : de façon parallèle au module de collecte de données relatives à l'utilisateur, le module 45 collecte les données des opérateurs (informations I7 : identification de l'opérateur, compétences de l'opérateur au regard des services proposés par le système, canaux de communication possibles pour le service proposé en relation avec le type de poste terminal occupé par l'opérateur etc.).

Le module 45 peut également collecter des données (informations I8) relatives aux comportements des opérateurs : par exemple, il peut collecter le temps passé par l'opérateur à traiter une demande donnée.

Le module 45 de données relatives aux opérateurs renseigne également le module logiciel 44 (ou programme informatique 44).

Toutes les informations reçues par le module logiciel 44 alimentent également chacun des modules 42 d'estimation de temps d'attente et 41 de prévision de flux de demandes qui, à leur tour, traitent les informations qu'ils reçoivent respectivement pour fournir au module d'ordonnancement 40 les informations I3 et I4.

Le module 41, qui détermine une prévision de flux de demandes d'utilisateurs en fonction des demandes I1 reçues en temps réel par ladite centrale de gestion, prend également en considération l'informations I9 relative à des données externes collectées par le module 5 de collecte de données externes 51, 52 et 53 : en effet, comme expliqué précédemment, certains paramètres extérieurs indépendants peuvent avoir des conséquences sur le flux de demandes reçues par la centrale de gestion : il peut s'agir de la météo, d'évènements notamment politiques (grèves de transports, évènement sanitaire majeur etc.).

Le module 41 de prévision des flux de demandes comprend un module d'intelligence artificielle IA41 qui prend en considération ces paramètres externes et leur influence sur la quantité de demandes de certaines natures ou sur l'engorgement de certains canaux de communication à des moments donnés : l'intelligence artificielle IA41 garde en mémoire les scénarios qui ont agi sur l'offre de services et le flux de demandes pour déterminer ladite prévision de flux de demandes d'utilisateurs potentiels et anticiper une quantité de demandes potentielles dans une catégorie de demandes données.

Concernant le module d'estimation du temps d'attente 42, il prend également en considération ces informations de paramètres extérieurs I9 pour prédéterminer, suivant au moins un canal de communication et/ ou suivant chaque canal possible pour le service demandé, une estimation du temps d'attente pour l'utilisateur.

En effet, par exemple, en temps de grève, les opérateurs disponibles pour répondre aux demandes peuvent être moins nombreux qu'en temps normal. Le temps d'attente pour obtenir une réponse à une demande suivant un canal de communication donné peut ainsi être allongé.

C'est pourquoi le module d'estimation du temps d'attente comporte, dans le cadre de l'exemple décrit, une intelligence artificielle IA42 qui collecte les données extérieures pour alimenter des scénarios qu'elle garde en mémoire afin de fournir une information de temps d'attente possible, pour chaque canal de communication, ou pour une quantité prédéterminée de canaux de communication (qui dépendent du profile utilisateur) par comparaison entre les données en temps réel dont la centrale de gestion dispose et qui comprend également les données externes I9 collectées par le module 5.

L'information d'estimation du temps d'attente 13, relative audit canal de communication prédéterminé et relative auxdits autres canaux parmi lesdits plusieurs canaux, est ainsi fournie au module d'ordonnancement 40 qui peut alors mettre en relation un poste de saisie 10 avec un terminal 20 en fonction de la demande de utilisateur 1 et de l'opérateur disponible le mieux placé pour correspondre aux plus de critères possibles relatifs à la nature de la demande et aux canaux de communication convenant à l'utilisateur.

Afin de mieux comprendre l'invention, nous allons décrire deux exemples de systèmes conformes à l'invention mis en oeuvre dans deux structures différentes : un centre de soins médicaux accueillant du public, d'une part, et une agence d'un service public qui peut également accueillir du public.

Il devra être compris que les deux exemples qui sont présentés ci-après ne sont en rien limitatifs pour l'invention et qu'elle peut s'appliquer dans d'autres structures accueillant du public, où le public (les clients, les utilisateurs, les abonnés, les adhérents etc.) attend un service ou bien a un besoin particulier qui nécessite une réponse de la part d'opérateurs (les commerçants, les fonctionnaires ou salariés en règle générale, le personnel etc., de la structure).

Il devra également être compris que les opérateurs de la structure peuvent se situer géographiquement dans la structure ou bien se trouver à une distance géographique éloignée, comme par exemple en étant en télétravail.

Suivant un premier exemple, un premier utilisateur 1 souhaite un rendez-vous médical pour renouveler une ordonnance.

L'utilisateur 1 dispose de plusieurs moyens de communication (postes de saisie 10) pour accéder au système mis en oeuvre dans le centre de soins : il peut prendre rendez-vous en ligne, via son smartphone 11 ou via son ordinateur 12 pour consulter un médecin 2 (poste terminal 22) en visio-conférence, ou être mis en relation avec une secrétaire médicale 2 (poste terminal 23). Mais il peut aussi décider de se déplacer physiquement dans le centre de soin : il disposera alors d'une borne 13 pour indiquer l'objet de sa visite (demande).

L'utilisateur s'identifie sur la borne 13, par exemple en indiquant son numéro de sécurité sociale.

La borne 13 transmet à la centrale de gestion 4 cette information et le module 43 de collecte de données relatives à l'utilisateur reconnait l'utilisateur et lui donne accès, via la borne 13, à tous les services pertinents qui lui sont attribués (prise de rendez-vous, services de santé spécifiques à son âge, à son état de santé, à ses préférences de communication, etc.).

L'utilisateur 1 peut alors formuler sa demande I1, qui est transmise au module d'ordonnancement 40.

On considère que le module 43 indique au module logiciel que l'utilisateur 1 a de sérieux problèmes de santé et qu'il est préférable qu'il consulte un médecin pour le renouvellement de son ordonnance : le canal de communication en rendez-vous présentiels est donc à privilégier par le système.

Toutefois, le module de collecte de données relatives aux opérateurs indique au système qu'il y a des médecins disponibles proposant des consultations en visio-conférence au moment où l'utilisateur 1 a formulé sa demande.

Ainsi, le système va considérer que deux canaux sont pertinents pour répondre à la demande de l'utilisateur : celui des rendez-vous en présentiel et celui des rendez-vous en visioconférence, le site géographique comportant une cabine de téléconsultations.

Le module de temps d'attente 42 va alors calculer pour ces deux canaux, le temps d'attente relatif pour une rendez-vous et le module 41 va indiquer une estimation du flux de demandes de rendez-vous pour ces deux canaux.

Le module d'ordonnancement 40 va alors déterminer la position de l'utilisateur dans la file d'attente pour ces deux canaux de communication.

Soit le module 40 l'indique à l'utilisateur via la borne 13, et l'utilisateur choisit le canal de communication qu'il préfère (rendez-vous en présentiel ou rendez-vous en téléconsultation), soit le module d'ordonnancement 40 choisit pour l'utilisateur le canal de communication 3 le plus pertinent pour l'utilisateur 1 qui est informé, via la borne 13, de sa position dans la file d'attente des rendez-vous en présentiel ou en téléconsultation.

Suivant un second exemple, un utilisateur 1 a besoin de prendre rendez-vous avec la Caisse d'Allocations Familiales pour indiquer un changement de situation (naissance, divorce, mariage etc.).

L'utilisateur 1 est un actif qui ne peut pas se déplacer aux heures d'ouvertures de la Caisse d'Allocations Familiale mais qui peut disposer d'une pause dans sa journée de travail pour échanger en ligne avec les opérateurs pour déclarer ce changement de situation.

L'utilisateur 1 va se connecter, via son ordinateur 12 (ou son smartphone 11) à son espace personnel sur le site de la Caisse d'Allocations Familiales (ou à son application sur son smartphone).

En se connectant, l'utilisateur 1 indique au système qui il est et le système a accès aux données personnelles de l'utilisateur 1, à ses préférences, aux services qui lui ont été attribués parmi tous les services proposés par la Caisse d'Allocation Familiale.

L'utilisateur 1 cherche dans le site, ou sur son application, parmi les services qui lui sont proposés, le service qui lui permettait de déclarer son changement de situation.

Dans notre exemple, l'utilisateur 1 consulte différents services, fait des aller/retour sur la page d'accueil du site (ou de l'application) : le module 43 détecte alors que l'utilisateur 1 est en difficulté pour trouver un service.

Le module 43 transmet cette information au module logiciel 44, qui demande au module d'ordonnancement 40 de prendre en considération une demande de mise en relation par chatbot (canal de communication 31, par exemple) pour qu'un opérateur puisse aider l'utilisateur à formuler sa demande ou à trouver le service adapté à sa demande.

Le module d'ordonnancement 40 inclut l'utilisateur 1 dans la liste d'attente des mises en contact par chatbot et dès qu'un opérateur 2 communiquant par ordinateur 22 se libère, il est mis en relation avec l'utilisateur 1 via le site (ou via l'application) et lui demande comment il peut l'aider.

Ou bien l'opérateur peut enregistrer directement la demande de l'utilisateur 1 (qui n'aura pas à être mis en attente) et une réponse est apportée de cette façon à la demande de l'utilisateur, ou bien l'opérateur 2 indique à l'utilisateur 1 où, dans le site ou l'application, il doit formuler sa demande.

Dans ce dernier cas, l'opérateur coupe la communication via le canal 31 après avoir donné ses explications et laisse l'utilisateur 1 appliquer ce qui lui a été expliqué.

L'utilisateur 1 formule alors sa demande I1 de changement de situation via le service dédié et sa demande I1 arrive au module d'ordonnancement, en même temps que les estimations de temps d'attente I3 et l'estimation de flux I2 pour les canaux de communication dédiés par lesquels les opérateurs répondent à ces demandes.

Le module d'ordonnancement 40 inclut l'utilisateur 1 dans la file d'attente dédiée, et lui indique sa position dans la file d'attente, une estimation de son temps d'attente pour être mis en relation avec un opérateur qui va traiter sa demande.

Afin de comprendre au mieux la portée de l'invention, dans sa globalité, les chapitres ci-dessous apportent des explications sur les verrous et contraintes quant à la réalisation d'une intelligence de gestion d'accueil de type multicanal conforme à l'invention.

### LA COLLECTE DES DONNEES

La collecte des données concerne plusieurs aspects du projet. Elle permet d'alimenter les quatre principaux modèles algorithmiques qui permettront de modéliser :
les profils des utilisateurs (qui vient et pourquoi - module 43),
l'ordonnancement et la gestion des files d'attente (comment mettre en relation une demande et sa meilleure réponse - module 40),
la prévision de flux (qui va venir et quand - module 41), et
l'estimation des temps d'attente (quels sont les temps d'attente à anticiper, à absorber, voire à présenter à l'utilisateur pour lui laisser le choix d'un canal parmi d'autres - module 42).

### LA COLLECTE ET LA STRUCTURE DES DONNEES

Les données colletées seront de deux ordres : les données dites événementielles et les données structurelles.

Les données événementielles sont principalement transmises au module informatique 44. Elles sont en lien avec tous les évènements d'accueil qui ponctuent et jalonnent le parcours d'un visiteur/utilisateur tout au long de son séjour dans un organisme d'accueil. Ce sont des données de masse. En revanche, les données structurelles proviennent à la fois du module informatique 44 mais également de sources externes (référence 5). Concernant le premier cas, elles correspondent à des notions structurantes (sites, services, motifs, postes... par exemples). Concernant le second cas, ce sont des données externes issues d'évènements extérieurs à la gestion d'accueil mais qui ont un impact sur celles-ci. Par exemple, les conditions météorologiques, de circulation, de grève..., qui influencent très largement les flux constatés sur la plupart des sites.

Compte tenu de tout ceci, le module informatique 44 présente une attention toute particulière en termes de conception, de gestion de la volumétrie, et de performance. Les données issues des notions à manipuler, leurs pertinences et leurs places dans cette architecture sont prises en considération par le module informatique.

### MODELE DE PROFILAGE DES USAGERS - MODULE43

Il s'agit ici de connaître au mieux le motif lié à la venue de chaque utilisateur. La collecte de données précédemment décrite alimente un modèle algorithmique qui se base sur des éléments (ou données) divers suivant le canal de communication.

Dans ce contexte, la connaissance de l'utilisateur et de ses besoins est souvent partielle. Concernant l'accueil physique, par exemple, le motif de visite (la demande) dépend le plus souvent d'une action de l'utilisateur sur une borne interactive. Dans le cas d'une venue spontanée, l'exactitude avec laquelle est connu son motif de visite dépend du niveau de fonctionnalité proposé par la borne : scénario d'accueil simple, scénario d'accueil approfondi et ergonomique, reconnaissance vocale.

Cependant, dans le cadre d'un rendez-vous, la raison de sa présence peut être connue an amont avec d'autant plus de pertinence si celui-ci est correctement orienté tout au long de son processus de recherche en ligne de son motif de visite.

C'est cet aspect qu'identifie le module 43, en détectant le parcours et les actions de l'utilisateur, en complément d'une mise à disposition d'un chatbot, afin de déterminer son profil, suivant son comportement, pour en déterminer son besoin. Cet aspect nécessite d'identifier les données pertinentes de comportement de l'utilisateur et de déterminer un modèle susceptible de fournir une réponse pour lui permettre de qualifier au mieux sa demande.

### MODELE DE GESTION DES FLUX, TEMPS REEL - MODULE 40

L'objectif du système conforme à l'invention est principalement de sélectionner le meilleur opérateur et le prochain utilisateur à recevoir compte tenu des conditions d'attente constatées et à venir, et en optimisant l'efficience de l'accueil en termes de qualité de traitement des utilisateurs et d'optimisation des débits (flux).

Dans ces conditions le fait d'introduire de nouveaux canaux de communication mais, également, d'injecter des contraintes issues des modèles de prévision des flux et de prévision des temps d'attente charge le moteur d'ordonnancement et de simulation.

Dans ce contexte, les algorithmes classiques de recherche exhaustive de solutions optimales ne sont pas assez performants pour une garantie de temps de réponse acceptables du système.

C'est pourquoi il est prévu de modéliser les solutions en mettant en oeuvre une intelligence artificielle IA40.

Un des verrous technologiques réside dans l'identification des données sources et la définition des paramètres qui pourront être considérés comme variables dans les méthodes et algorithmes mis en oeuvre, compte tenu des contraintes liées à chacun des utilisateurs (divers et variés) et compte tenu de l'ensemble des canaux de communication possibles proposés par le système conforme à l'invention.

Les données sont issues principalement du module informatique 44 comme indiqué ci-avant. Elles correspondent aux évènements d'accueil mais portent également sur des notions structurantes relatives à l'organisation des espaces d'accueil, aux ressources et aux canaux en place pour assurer la réception des utilisateurs. Toutefois les données sont également issues de bases externes comme indiqué ci-avant, également.

### MODELISATION

Un verrou technique résulte également de la modélisation de la file d'attente obtenue en fonction des contraintes des différents canaux.

Par exemple, le canal téléphonique ou spontané peut être traité de façon similaire. Dans les deux cas, il n'existe pas d'obligation entre le système et l'utilisateur qui est libre de partir ou d'arriver à sa guise.

Le canal des rendez-vous, à l'inverse, est un canal qui peut être contractualisé puisque l'utilisateur doit être reçu à l'heure de son rendez-vous. Par ailleurs, les temps de réponse de prise en charge attendus par des utilisateurs ne sont pas les mêmes. Par exemple, nous sommes prêts à attendre plusieurs minutes dans une file d'attente physique qui nous semble longue, moins dans le cas d'un rendez-vous et encore moins au téléphone.

De plus, les canaux sont de différentes natures, certains sont asynchrones, d'autres synchrones, dans le sens où, d'un côté, la réponse à un mail ou à un chatbot peut être délayée et s'étaler dans le temps tout en gérant plusieurs réponses parallèlement, de l'autre, la prise en charge d'un appel téléphonique ou d'une visite physique réclame une attention exclusive.

### RECHERCHE D'UN DEGRE D'UNIVERSALITE

Dans ce contexte multicanal, le vocabulaire et les notions manipulées par les algorithmes de l'intelligence artificielle IA40 sont valables et compréhensibles sur tous les canaux de communication.

### MODELE DE PREVISION DES TEMPS D'ATTENTE - MODULE 42

Les théories classiques de gestion des files d'attente autorisent une approche correcte de l'estimation des temps d'attente mais dont la précision est insuffisante alors que l'invention permet de déterminer le temps d'attente d'un utilisateur au moment où il prend un ticket sur une borne.

Par ailleurs, les algorithmes de simulation qui sont mis en oeuvre dans les solutions connues jusqu'à ce jour réclament des temps de calcul trop longs.

L'intelligence artificielle IA42 permet trouver des modèles capables de prévoir les temps d'attente à court terme, dans l'heure, en tenant compte des utilisateurs prévus et d'estimer au mieux le temps d'attente prévu d'un utilisateur au moment de son arrivée, tout en gardant des performances acceptables pour alimenter le moteur temps réel d'ordonnancement et de gestion des flux.

Le module d'ordonnancement 40 a pour but de déterminer la meilleure ressource capable de prendre en charge un utilisateur, suivant ses degrés d'aptitude prédéfinis dans la solution d'accueil, mais en tenant compte, cette fois, des temps d'attente anticipés et estimés, l'objectif étant toujours de réduire les temps d'attente compte tenu des ressources disponibles et de leurs capacités et priorités de prise en charge des utilisateurs sur les différents motifs de visites proposés.

### MODELE DE PREVISION DES FLUX - MODULE 41

Un des verrous technologiques réside dans l'identification des données sources et la définition des paramètres qui pourront être considérés comme variables et impactant quant à l'entrainement et la mise en oeuvre d'une IA de prévision des flux, compte tenu des contraintes et des comportements liés à chacun de nos clients (divers et variés) et compte tenu de l'ensemble des canaux que nous allons mettre en place.

On comprend de la description qui précède comment l'invention permet d'offrir un service qui prend en considération les particularités propres aux utilisateurs avant de mettre en relation une demande et un service.

Grâce au module de données relatives aux utilisateurs, le système permet de détecter des habitudes, des situations particulières, des données propres à l'utilisateur, afin de lui offrir un service adapté et personnalisé.

Grâce au module de données relatives aux opérateurs, le système est renseigné en permanence sur les services disponibles et sur la particularité des opérateurs (rapidité de réponse, identification de l'opérateur le plus adapté pour répondre etc.).

Grâce au module d'estimation des flux et grâce au module d'estimation des temps d'attente, le module d'ordonnancement est capable de créer des files d'attentes dans des canaux de communication qui sont adaptés au profil de l'utilisateur, de manière à répondre au mieux à la nature de sa demande et à sa façon de communiquer.

Il devra être compris que l'invention n'est pas limitée aux exemples décrits précédemment et qu'elle s'étend à la mise en oeuvre de tout moyen équivalent.

## Revendications

1. Système pour orienter des utilisateurs (1) vers des opérateurs (2), apte à délivrer des réponses à des demandes desdits utilisateurs (1), chaque réponse parmi lesdites réponses étant délivrée suivant au moins un canal de communication (3), ledit système comportant :
- des postes de saisie (10 - 13), permettant aux utilisateurs (1) de formuler lesdites demandes,
- des postes terminaux (20 - 23), permettant auxdits opérateurs (2) de délivrer lesdites réponses, et
- une centrale de gestion (4), qui communique avec lesdits postes de saisie (10 - 13) et lesdits postes terminaux (20 - 23),
ledit système comportant plusieurs canaux de communication (31 , 32, 3n) entre lesdits postes de saisie (10 - 13) et lesdits postes terminaux (20 - 23),
et ladite centrale de gestion (4) comportant un module (40) d'ordonnancement des demandes des utilisateurs (1) dans chacun des canaux de communication (31, 32, 3n), ledit module d'ordonnancement (40) recevant:
- des premières informations (I1) relatives à des demandes d'utilisateurs et à des profils d'utilisateurs, lesdites premières informations comprenant pour chaque utilisateur une information de préférence d'au moins un canal de communication en fonction d'un profil utilisateur,
et recevant, pour chaque demande utilisateur reçue :
- une information (I2) de prévision de flux dans chacun desdits canaux de communication (31, 32, 3n), ainsi qu'une information (I3) de prévision de temps d'attente,
ledit module d'ordonnancement (40) créant, pour chaque canal de communication( 31, 32, 3n), des files d'attente de mise en communication entre un utilisateur (1) et un opérateur (2),
**caractérisé en ce que** ledit module d'ordonnancement (40) comporte une intelligence artificielle (IA40) qui génère des files d'attente de demandes dans chacun des canaux de communication (31, 32, 3n) en fonction des informations (I2, I3) qui lui sont transmises par le module (42) d'estimation des temps d'attente et par le module (41) d'estimation des flux
et **en ce que** :
- il autorise ou empêche (S1, S2, Sn) un poste terminal (21, 22, 23) à communiquer avec plusieurs postes de saisie (11, 12, 13) uniquement suivant un canal de communication particulier (31), et
- il autorise ou empêche (S1, S2, Sn) un poste terminal (21, 22, 23) à communiquer avec plusieurs postes de saisie (11, 12, 13) suivant plusieurs canaux de communication (31, 32, 3n)..

2. Système selon la revendication 1, **caractérisé en ce que** ladite centrale de gestion (4) comporte un module (43) de collecte de données relatives à chacun desdits utilisateurs, comportant des données personnelles (I5) apte à être renseignées par lesdits utilisateurs (1).

3. Système selon la revendication 2, **caractérisé en ce que** ledit module (43) de collecte de données relatives aux utilisateurs collecte des données comportementales (I6) associées à chacun des utilisateurs (1).

4. Système selon la revendication 3, **caractérisé en ce que** ledit module (43) de collecte de données relatives aux utilisateurs comporte une première intelligence artificielle (IA43) qui détermine ledit profil d'utilisateur pour chaque utilisateur, en fonction desdites informations personnelles (I5) renseignées pour chaque utilisateur et/ou en fonction des données comportementales (I6) collectées en temps réel pour chaque utilisateur, ladite intelligence artificielle (IA43) déterminant l'utilisation d'au moins un canal de communication particulier (31) parmi lesdits canaux de communication (31, 32 3n) pour ledit profil d'utilisateur déterminé.

5. Système selon l'une quelconque des revendications précédentes, **caractérisé en ce que** ladite centrale de gestion (4) comporte un module (41) de prévision de flux de demandes d'utilisateurs dans lesdits canaux de communication, qui détermine ladite information (I2) de prévision de flux de demandes dans chaque canal de communication (31, 32 ,3n) en fonction des demandes des utilisateurs reçues en temps réel et en fonction d'informations relatives à des données externes (51, 52, 53) collectées par un module (5) de collecte de données externes, ledit module (41) de prévision des flux de demandes communiquant avec ledit module d'ordonnancement. (40)

6. Système selon la revendication 5, **caractérisé en ce que** ledit module (41) de prévision des flux de demandes comporte une seconde intelligence artificielle (IA41) qui collecte des informations relatives aux demandes reçues en temps réel et à des données internes issues d'un apprentissage de ladite intelligence artificielle (IA41) sur les habitudes de demandes des utilisateurs (1) et sur les canaux de communication (31, 32, 3n) les plus sollicités en fonction du temps et en fonction des données externes (51, 52, 53),
ladite seconde intelligence artificielle (IA41) déterminant ladite information (I2) de prévision de flux de demandes dans lesdits canaux, qui est transmise audit module d'ordonnancement (40).

7. Système selon la revendication 4 ou selon l'une quelconque des revendications 5 ou 6 combinée à la revendication 4, **caractérisé en ce que** ladite centrale de gestion (4) comporte un module (42) d'estimation de temps d'attente, transmettant audit module d'ordonnancement (40) une estimation de temps d'attente (I3) pour chaque demande d'utilisateur pour ledit au moins un canal de communication particulier (31), de sorte que si plusieurs canaux de communication particuliers (31) sont possibles, ledit module d'ordonnancement (40) puisse déterminer le canal de communication particulier (31) le plus rapide pour chaque demande de chaque utilisateur (1).

8. Système selon la revendication 7, **caractérisé en ce que** ledit module (42) de calcul de temps d'attente comporte une troisième intelligence artificielle (IA42) qui détermine ladite estimation de temps d'attente dans chaque canal de communication (31, 32, 3n) pour chaque demande d'utilisateur reçue en temps réel et en fonction de données internes issues d'un apprentissage de ladite troisième intelligence artificielle (IA42) sur les habitudes de demandes des utilisateurs et sur les canaux de communication (31, 32, 3n) les plus sollicités en fonction du temps et en fonction de données externes, ladite troisième intelligence artificielle (IA42) déterminant ladite information (I3) de prévision de temps d'attente qui est transmise audit module d'ordonnancement (40).

9. Système selon l'une quelconque des revendications précédentes, **caractérisé en ce que** ladite centrale de gestion (4) comporte un second module (45) de collecte de données (I7, I8) relatives auxdits opérateurs (2), pour déterminer des canaux de communication (31, 32, 3n) possibles dudit poste terminal (20, 21, 22, 23) associé à l'opérateur (2).
